# FASCICULE DE BREVET EUROPEEN

(11) **EP 2 158 370 B1**
(45) Date de publication et mention de la délivrance du brevet: **31.10.2012**
(21) Numéro de dépôt: 08787873.2
(22) Date de dépôt: 28.03.2008
(51) Int. Cl.: E05C 19/14, B64D 29/08, E05B 13/00, B64D 29/06, E05B 17/22, E05B 1/00

(54) **DISPOSITIF DE VERROUILLAGE D'UNE PARTIE OUVRANTE DE NACELLE DE TURBORÉACTEUR PAR RAPPORT À UNE PARTIE FIXE, ET NACELLE ÉQUIPÉE D'UN TEL DISPOSITIF**
VORRICHTUNG ZUR VERRIEGELUNG EINES ÖFFNUNGSELEMENTS EINER TRIEBWERKSGONDEL IN BEZUG AUF EIN FIXES TEIL UND DAMIT AUSGESTATTETES TEIL
DEVICE FOR LOCKING AN OPENING PART OF A JET ENGINE NACELLE WITH RESPECT TO A FIXED PART, AND NACELLE EQUIPPED WITH SUCH A DEVICE

(30) Priorité: 25.05.2007 FR 0703699
(43) Date de publication de la demande: 03.03.2010
(73) Titulaire: Aircelle, 76700 Gonfreville l'Orcher (FR)
(72) Inventeur: JORET, Jean-Philippe, F-27210 Beuzeville (FR); VAUCHEL, Guy, F-76600 Le Havre (FR)
(74) Mandataire: Gaillarde, Frédéric F. Ch.
(86) Numéro de dépôt international: PCT/FR2008/000433
(87) Numéro de publication internationale: WO 2008/145832

(56) Documents cités:
- EP-A- 0 839 714
- US-A- 4 768 815
- US-B1- 6 343 815

## Description

La présente invention se rapporte à un dispositif de verrouillage d'une partie ouvrante de nacelle de turboréacteur par rapport à une partie fixe, et à une nacelle équipée d'un tel dispositif.

On connaît de la technique antérieure un système de verrouillage d'une partie ouvrante de nacelle de turboréacteur par rapport à une partie fixe, comprenant typiquement :
- des moyens de verrouillage de ladite partie ouvrante par rapport à ladite partie fixe, et
- des moyens d'actionnement de ces moyens de verrouillage, montés mobiles sur ladite partie ouvrante entre une position de fermeture dans laquelle ils permettent le blocage desdits moyens de verrouillage et une position d'ouverture dans laquelle ils permettent la libération de ces moyens de verrouillage.

Un tel système est par exemple connu du document US 6343815 qui correspond au préambule de la revendication 1 et permet typiquement de verrouiller entre eux les demi-capots d'une nacelle de turboréacteur susceptibles de s'ouvrir vers le haut par pivotement autour d'axes sensiblement parallèles à l'axe de la nacelle.

Une fois que ces deux capots sont déverrouillés, des moyens spécifiques tels que des vérins hydrauliques ou électriques agissent sur ces deux capots de manière à permettre leur ouverture.

Ces moyens spécifiques d'actionnement ont un poids non négligeable, et leur installation à l'intérieur de la nacelle induit une certaine complexité.

La présente invention a notamment pour but de s'affranchir de ces inconvénients.

On atteint ce but de l'invention avec un dispositif de verrouillage d'une partie ouvrante de nacelle de turboréacteur par rapport à une partie fixe, comprenant :
- des moyens de verrouillage de ladite partie ouvrante par rapport à ladite partie fixe,
- des moyens d'actionnement de ces moyens de verrouillage, montés mobiles sur ladite partie ouvrante entre une position de fermeture dans laquelle ils permettent le blocage desdits moyens de verrouillage et une position d'ouverture dans laquelle ils permettent la libération de ces moyens de verrouillage,

ce dispositif étant remarquable en ce que lesdits moyens d'actionnement comprennent des moyens de préhension, et en ce qu'il comprend des moyens pour bloquer en position d'ouverture lesdits moyens de préhension par rapport à ladite partie ouvrante au moins selon la direction de déplacement de ladite partie ouvrante.

Grâce à la présence de ces moyens de préhension et à la possibilité de les bloquer dans la direction de déplacement de la partie ouvrante, on peut déplacer manuellement la partie ouvrante par rapport à la partie fixe : il n'est donc plus nécessaire de prévoir des moyens d'actionnement dédiés aux déplacements de la partie ouvrante, ce qui permet de faire une économie de poids et de complexité.

Suivant d'autres caractéristiques optionnelles du dispositif selon l'invention :
- lesdits moyens de préhension sont mobiles en rotation entre lesdites positions de fermeture et d'ouverture,
- lesdits moyens de préhension sont mobiles en translation entre lesdites positions de fermeture et d'ouverture,
- lesdits moyens de verrouillage comprennent au moins un crochet monté mobile sur ladite partie ouvrante et apte à coopérer avec un contre-crochet formé dans ladite partie fixe,
- lesdits moyens de verrouillage comprennent au moins un doigt monté mobile sur ladite partie ouvrante et apte à coopérer avec un orifice formé dans ladite partie fixe,
- lesdits moyens de blocage comprennent au moins un doigt monté mobile sur ladite partie ouvrante et apte à coopérer avec un cran de blocage solidaire de cette partie ouvrante,
- lesdits moyens de blocage comprennent une came de blocage,
- lesdits moyens de blocage comprennent un fourreau dans lequel sont montés lesdits moyens de préhension,
- ce dispositif comprend une gâchette de dégagement desdits moyens de préhension : cette gâchette permet, avec une faible pression, de rendre accessibles les moyens de préhension,
- ce dispositif comprend des moyens de freinage de ladite partie ouvrante par rapport à ladite partie fixe, et des moyens d'actionnement de ces moyens de freinage, montés sur lesdits moyens de préhension : ces moyens de freinage permettent d'éviter les déplacements intempestifs de la partie ouvrante pendant les opérations de maintenance,
- lesdits moyens de verrouillage sont commandés électriquement par lesdits moyens d'actionnement,
- lesdits moyens de verrouillage sont géographiquement distincts desdits moyens d'actionnement : ceci permet de concilier les implantations respectives des moyens de verrouillage et des moyens d'actionnement avec les contraintes géométriques des parties fixe et ouvrante de la nacelle.

La présente invention se rapporte également à une nacelle de turboréacteur, comprenant une partie fixe et une partie ouvrante, remarquable en ce qu'elle comprend un dispositif de verrouillage de ces deux parties l'une par rapport à l'autre conforme à ce qui précède.

Suivant une caractéristique optionnelle de cette nacelle, ladite partie ouvrante est montée coulissante par rapport à ladite partie fixe.

D'autres caractéristiques et avantages de la présente invention apparaîtront à la lumière de la description qui va suivre, et à l'examen des figures ci-annexées dans lesquelles :
- les figures 1 à 3 représentent en perspective une nacelle selon l'invention montée sous une aile d'avion, cette nacelle étant représentée dans trois étapes successives de déplacement de sa partie ouvrante par rapport à sa partie fixe,
- les figures 4 à 16 représentent de manière schématique une séquence d'ouverture et de fermeture d'un premier mode de réalisation du dispositif de verrouillage selon l'invention,
- les figures 17 et 18 représentent de manière schématique une séquence d'ouverture d'un deuxième mode de réalisation du dispositif de verrouillage selon l'invention,
- les figures 19 à 25 représentent de manière schématique une séquence d'ouverture d'un troisième mode de réalisation du dispositif de verrouillage selon l'invention,
- les figures 26 et 27 représentent de manière schématique les deux positions d'un système de freinage incorporé au mode de réalisation des figures17 et 18, et
- les figures 28 et 29 représentent de manière schématique une séquence d'ouverture d'encore un autre mode de réalisation du dispositif de verrouillage selon l'invention.

Sur ces figures, des numéros de références identiques désignent des organes identiques ou analogues.

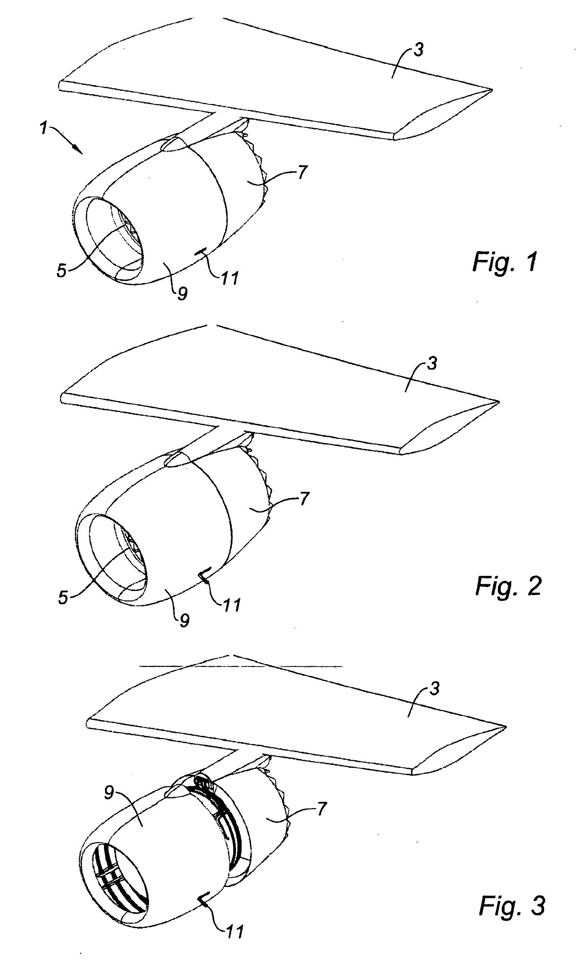

En se reportant aux figures 1 à 3, on peut voir que la nacelle 1 placée sous une aile d'avion 3 et incorporant un turboréacteur 5 comprend d'une part une partie arrière fixe 7, et d'autre part une partie avant 9 ouvrante de manière à permettre l'accès au turboréacteur 5 pour les opérations de maintenance.

Comme cela est visible sur la figure 3, l'ouverture de la partie avant de nacelle 9 s'effectue par coulissement par rapport à la partie arrière fixe 7.

Avant d'effectuer ce coulissement, il est nécessaire d'agir sur au moins un dispositif de verrouillage 11 de manière à le placer dans une position d'ouverture visible sur la figure 2, permettant de désolidariser la partie avant ouvrante 9 de la partie arrière fixe 7 de la nacelle 1.

On va à présent étudier de plus près les différentes manières de réaliser le dispositif de verrouillage 11.

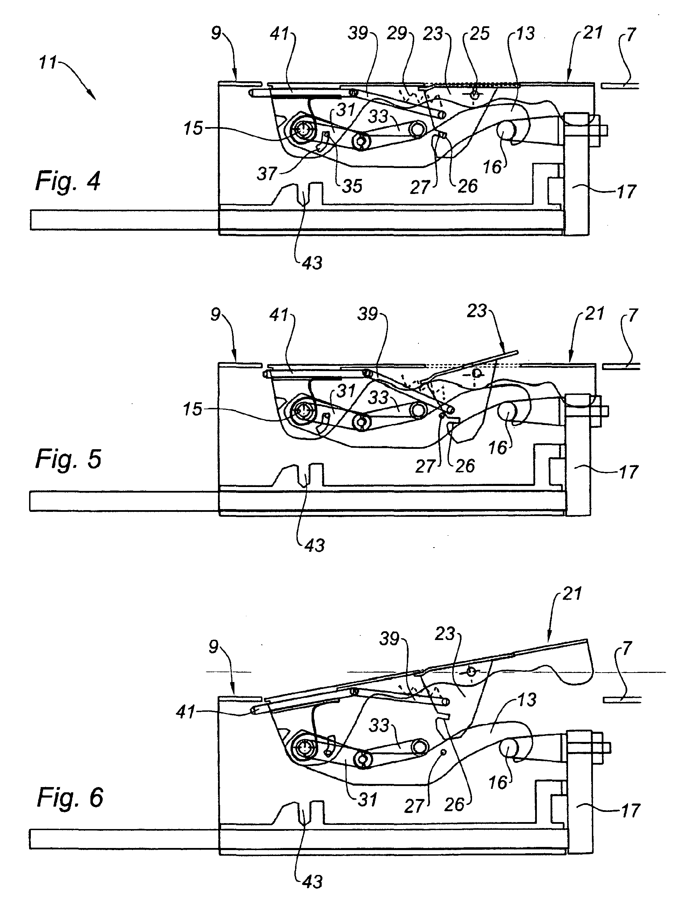

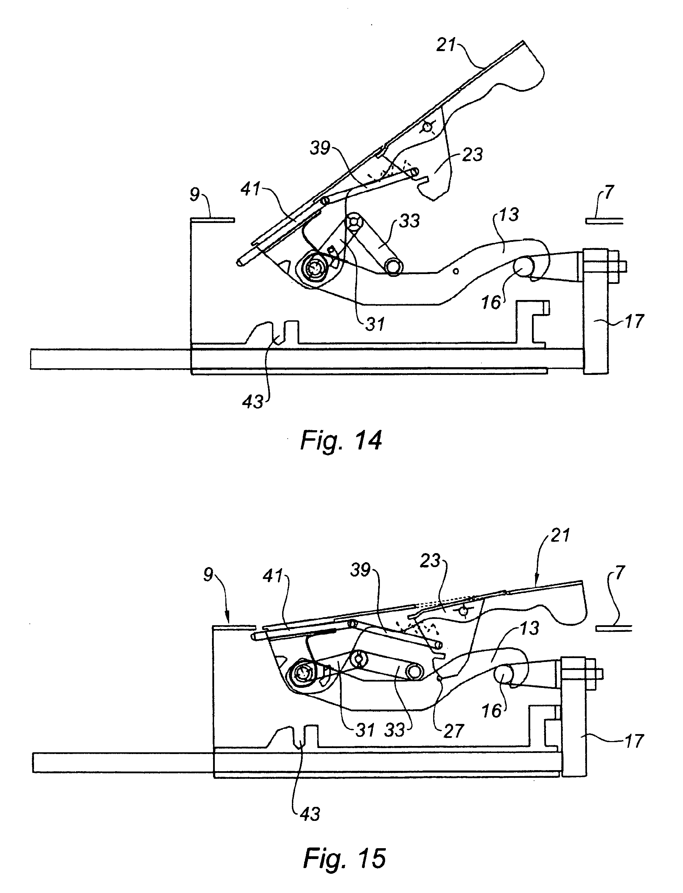

Dans le mode de réalisation des figures 4 à 16, ce dispositif de verrouillage comprend un crochet 13 monté pivotant autour d'un axe 15 à l'intérieur de la partie ouvrante 9.

En position de fermeture visible sur la figure 4, ce crochet 13 coopère avec un contre-crochet 16 solidaire d'une partie fixe 17 de la nacelle 1, elle-même solidaire de la partie arrière fixe 7.

Une poignée de préhension 21, affleurant avec la paroi extérieure de la partie ouvrante 9 dans la position de fermeture représentée à la figure 4, est montée pivotante autour de l'axe 15 du crochet 13.

Une gâchette 23 est montée pivotante sur la poignée de préhension 21 autour d'un axe 25 sensiblement parallèle à l'axe 15.

Cette gâchette 23 comporte une encoche 26 qui, dans la positon de fermeture représentée à la figure 4, coopère avec un pion 27 solidaire du crochet 13.

Des moyens de rappel élastique tels qu'un ressort 29 sont interposés entre la poignée de préhension 21 et la gâchette 23, de manière à rappeler cette dernière dans sa positon où l'encoche 26 vient en appui sur le pion 27.

Une première bielle 31 est montée pivotante autour de l'axe 15, et une deuxième bielle 33 est elle-même montée pivotante sur cette première bielle, ainsi que sur le crochet 13.

Un pion 35 solidaire de la première bielle 31 coopère avec une rainure 37 formée dans la poignée de préhension 21.

Une troisième bielle 39 est montée pivotante sur la gâchette 23 et coopère avec un doigt 41 monté coulissant sur la poignée de préhension 21.

Un cran de blocage 43 apte à coopérer avec le doigt 41 est prévu dans la partie ouvrante 9.

Le mode de fonctionnement du dispositif de verrouillage qui vient d'être décrit en position de fermeture est le suivant.

On commence par appuyer sur la gâchette 23 de manière à la faire pivoter autour de son axe 25 et à désengager son encoche 26 du pion 27 (voir figure 5).

Ce désengagement permet de libérer la rotation de la poignée de préhension 21 (voir figure 6).

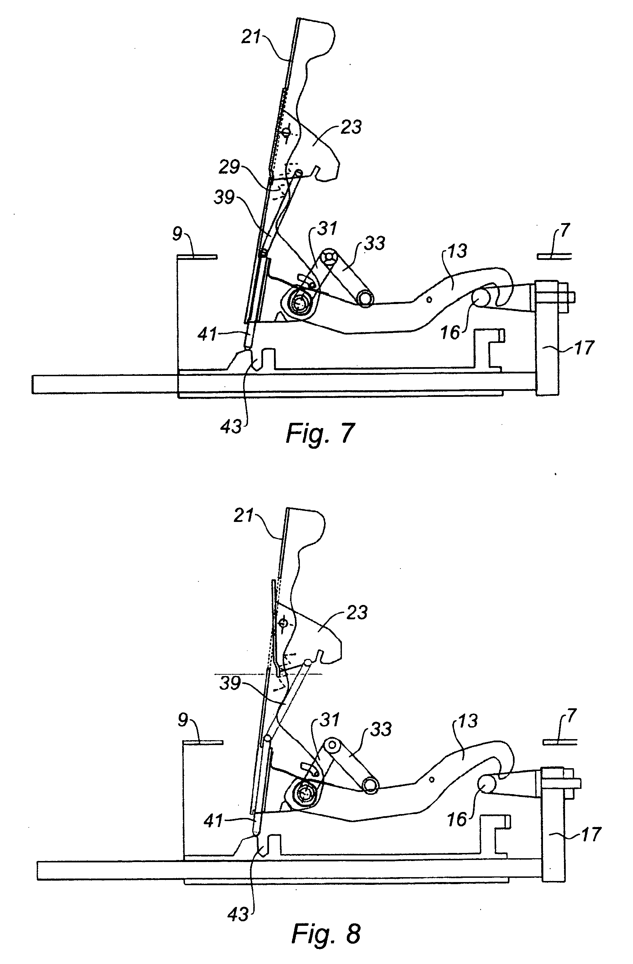

On fait donc pivoter cette dernière autour de son axe 15. Lors de ce pivotement, la rainure 37 entraîne en rotation le pion 35, et donc par là même les première et deuxième bielles 31, 33 qui, permettent le désengagement du crochet 13 du contre-crochet 16 (voir figures 7 et 8).

On poursuit le mouvement de rotation de la poignée de préhension 21 jusqu'à ce que le doigt 41 vienne s'enclencher dans le cran de blocage 43, à l'encontre de l'effort de rappel élastique exercé par le ressort 29 sur la gâchette 23 et donc sur la troisième bielle 39.

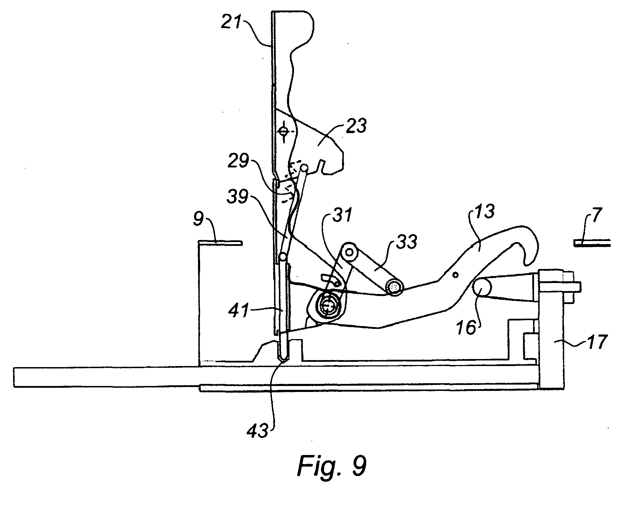

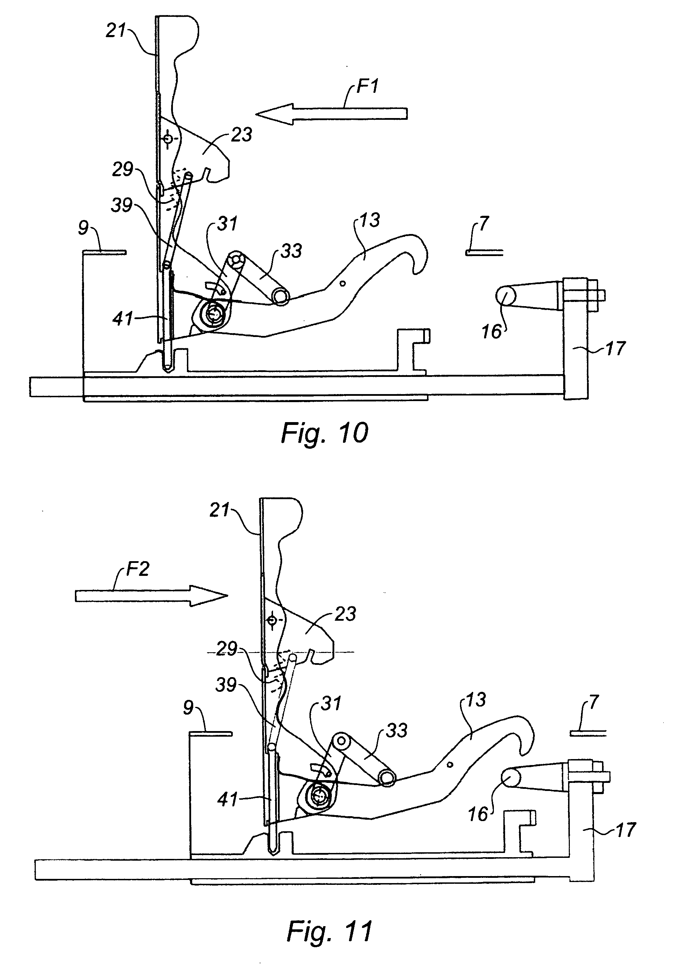

Cet enclenchement du doigt 41 dans le cran de blocage 43 permet de bloquer la poignée de préhension 21 dans la position visible sur les figures 9 à 11, et ainsi d'utiliser cette poignée de préhension pour mouvoir la partie ouvrante 9 par rapport à la partie fixe 7, soit dans un sens permettant l'ouverture de celle-là par rapport à celle-ci (voir la flèche F1 sur la figure 10) soit dans l'autre sens (voir la flèche F2 sur la figure 11).

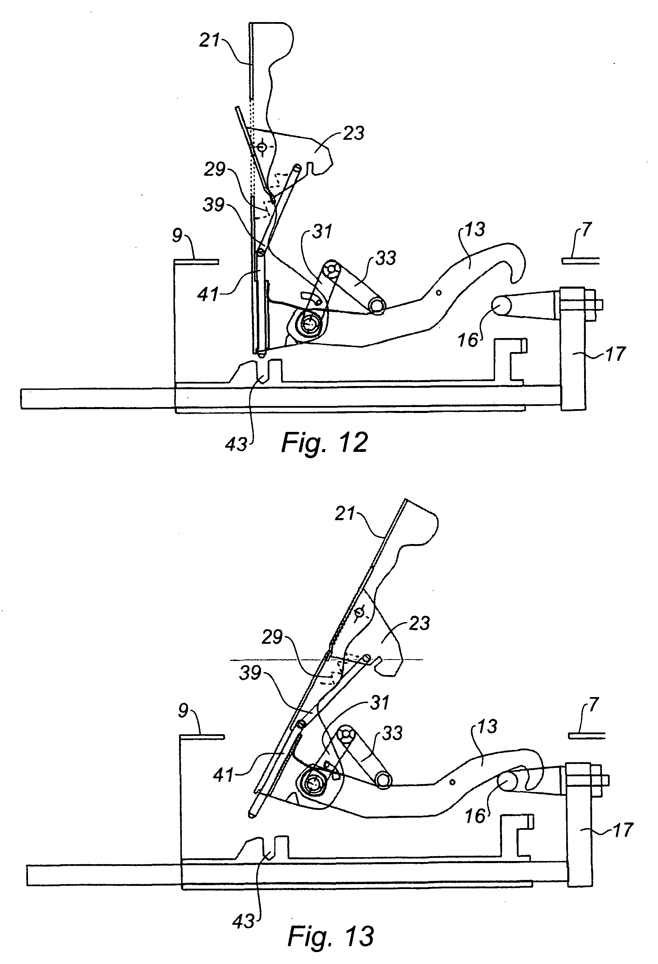

Pour procéder à la fermeture du dispositif de verrouillage qui vient d'être décrit, on appuie sur la gâchette 23 de manière à la faire pivoter autour de son axe 25 et à extraire ainsi le doigt 41 du cran de blocage 43 par l'intermédiaire de la troisième bielle 39 (voir figure 12).

Ce désengagement du doigt 41 par rapport au cran de blocage 43 étant effectué, il est possible de faire pivoter la poignée de préhension 21 autour de son axe 15 vers sa position de fermeture, grâce à quoi le crochet 13 retourne dans sa positon de verrouillage sur le contre-crochet 16 (voir figures 13 à 15).

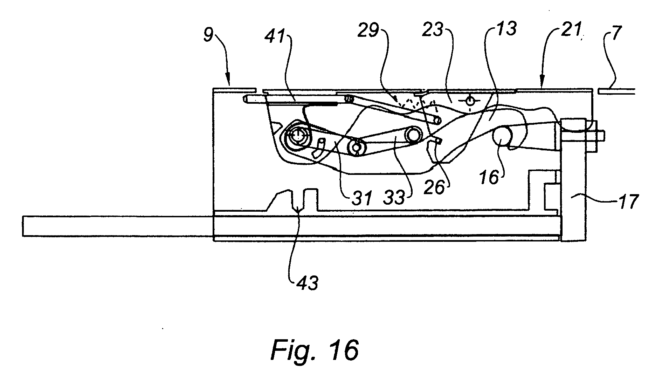

Enfin, en rabattant complètement la poignée de préhension 21 dans le plan de la paroi extérieure de la partie ouvrante 9, on vient enclencher l'encoche 26 de la gâchette 23 sur le pion 27, et l'on replace ainsi le dispositif de verrouillage dans sa position initiale (voir figure16).

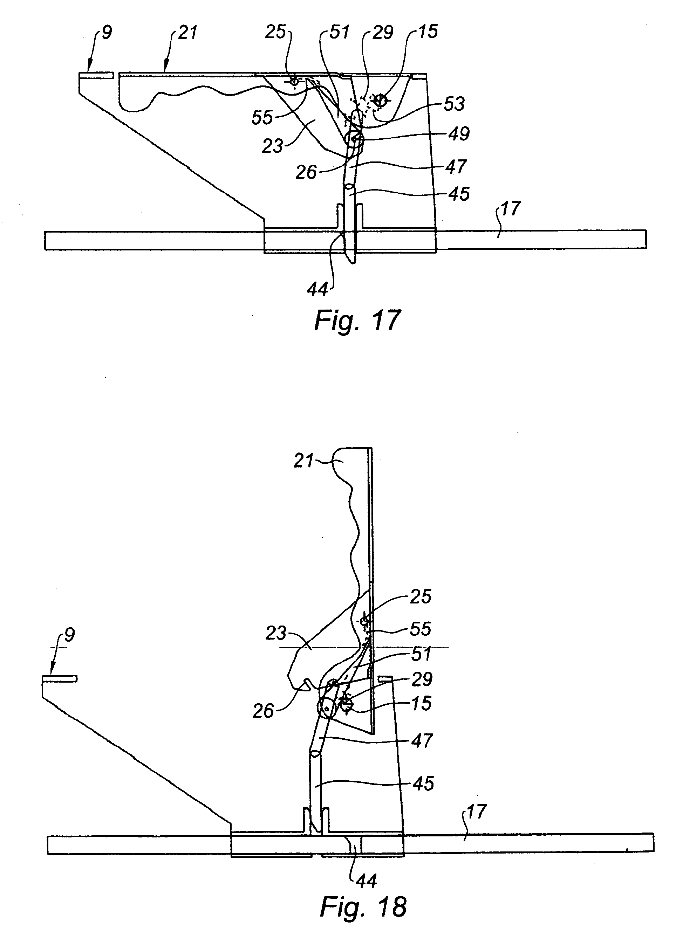

Dans le mode de réalisation représenté sur les figures 17 et 18, la partie fixe 17 comprend un orifice 44 dans lequel est susceptible de s'engager un doigt de verrouillage 45, lui-même monté pivotant sur une bielle 47, elle-même montée pivotante sur la poignée de préhension 21.

Dans la position de fermeture représentée à la figure 17, l'encoche 26 de la gâchette 23 coopère avec un pion 49 monté sur la bielle 47.

D'autre part, une came 51 montée pivotante autour du pion 49 est prévue, cette came étant rappelée par un ressort 53 en appui contre une butée 55 solidaire de la poignée de préhension 21.

Pour ouvrir ce dispositif de verrouillage, on commence par appuyer sur la gâchette 23 de manière à désengager l'encoche 26 du pion 49 de par la rotation de cette gâchette autour de son axe 25.

Ceci permet de libérer la poignée de préhension 21 que l'on peut alors faire pivoter autour de son axe 15 pour l'amener dans sa position représentée à la figure 18.

Ce faisant, la bielle 47 extrait le doigt 45 de son orifice 44, ce qui permet donc de déverrouiller la partie ouvrante 9 par rapport à la partie fixe 17, et ainsi de faire coulisser celle-là par rapport à celle-ci (voir figure 18).

On peut noter également que lors de l'ouverture cela poignée de préhension 21, la came 51 vient franchir la butée 55 sous l'action du ressort 53, de sorte que cette came vient se bloquer de l'autre côté de cette butée comme cela est visible à la figure 18 : ce blocage de la came par rapport à cette butée permet de réaliser le blocage de la poignée de préhension 21 dans sa position visible à la figure 18, par laquelle il est possible d'agir manuellement sur le déplacement de la partie ouvrante 9.

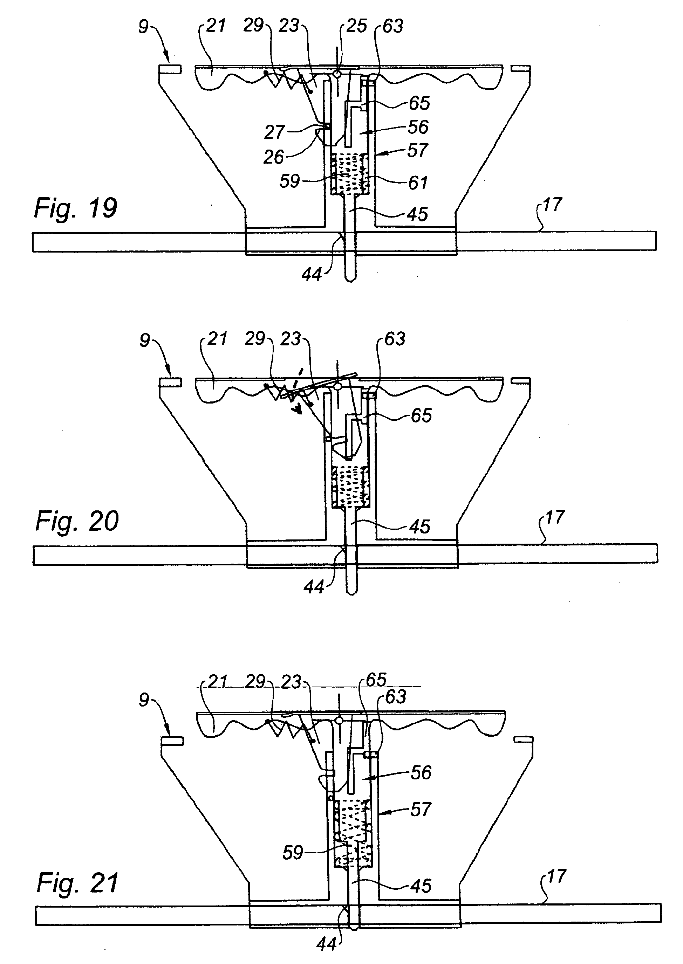

Dans le mode de réalisation visible sur les figures 19 à 25, la poignée de préhension 21 est solidaire d'un corps 56 monté mobile en translation et en rotation à l'intérieur d'un fourreau 57, ce corps étant lui-même prolongé d'un doigt 45, lui-même susceptible de coopérer avec un orifice 44 formé dans la partie fixe 17.

Le corps 56 comporte une partie inférieure 59 de moindre diamètre, autour de laquelle est disposé un ressort 61 prenant appui sur le fond du fourreau 57.

Sur le bord supérieur du fourreau 57, est prévue une butée 63 apte à coopérer avec une rainure en forme de baïonnette 65 creusée dans le corps 56.

D'autre part, une gâchette 23 analogue à celle des modes de réalisation précédents est montée affleurante sur la poignée de préhension 21 et pivotante autour d'un axe 25 solidaire de cette poignée.

Un ressort 29 rappelle cette gâchette 23 dans une position où son encoche 26 coopère avec un pion 27 solidaire du fourreau 57 (voir figure 19).

Pour ouvrir le dispositif de verrouillage qui vient d'être décrit, on procède de la manière suivante.

On commence tout d'abord par exercer une pression sur la gâchette 23, de manière à désengager l'encoche 26 de cette gâchette du pion 27 (voir figure 20).

Sous l'effet du ressort 61, le corps 56 et donc la poignée de préhension 21 remontent à l'intérieur du fourreau 57 jusqu'à ce que la butée 63 vienne en butée dans un premier virage de la rainure en baïonnette 65 (voir figure 21).

Dans cette position intermédiaire, le doigt 45 est toujours placé à l'intérieur de l'orifice 44, et un mouvement de la partie ouvrante 9 par rapport à la partie fixe 17 n'est pas encore possible.

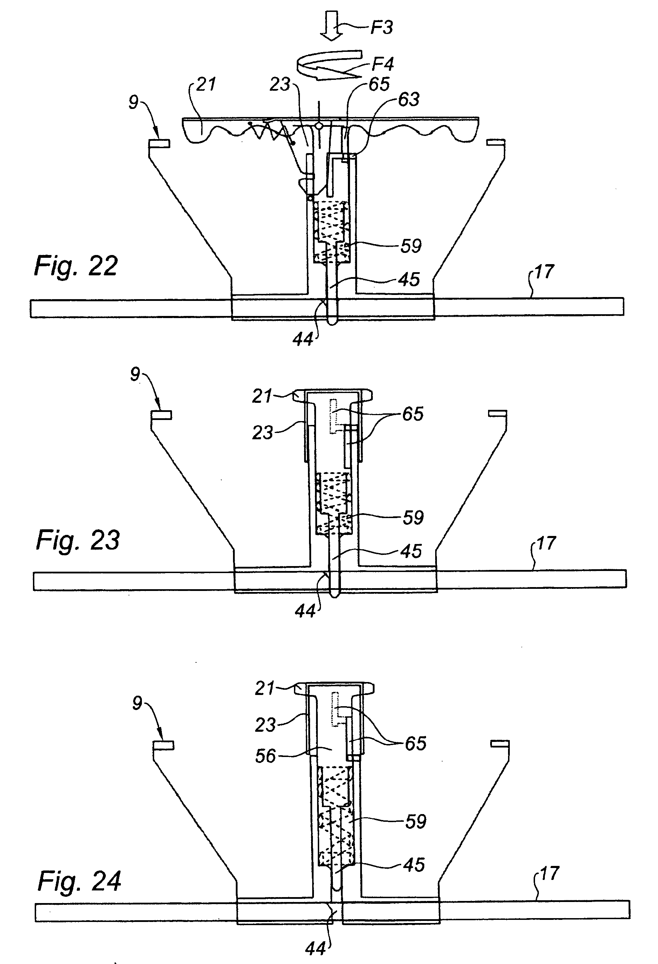

L'étape suivante consiste à désengager le butée 63 du premier virage de la rainure 65 : ceci est effectué en exerçant une légère pression vers le bas de la poignée de préhension 21, comme cela est indiqué par la flèche F3 de la figure 22 ; ce faisant, on imprime à la poignée de préhension 21 un mouvement quart de tour, comme cela est indiqué par la flèche F4 de la figure 22.

Ce mouvement quart de tour permet de faire défiler une partie intermédiaire de la rainure 65 le long de la butée 63, jusqu'à ce que cette butée se trouve dans la troisième et dernière portion de la rainure 65, comme cela est visible sur la figure 23.

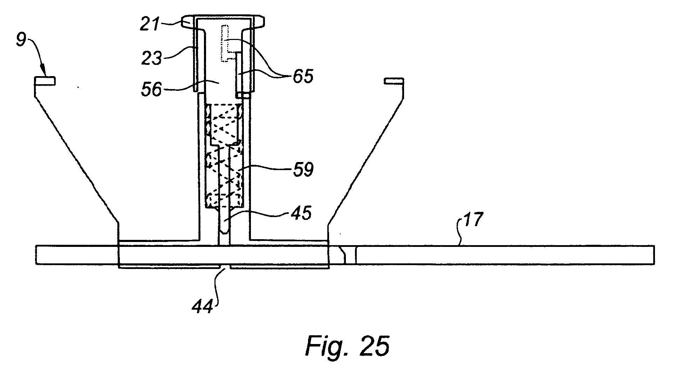

Cette dernière portion de la rainure 65 autorise une course supplémentaire en translation de la poignée de préhension 21, permettant d'amener cette poignée de la position représentée à la figure 23 dans laquelle le doigt 45 coopère encore avec l'orifice 44, à la position représentée à la figure 24, dans laquelle ce doigt 45 est sorti de cet orifice, permettant ainsi le coulissement de la partie ouvrante 9 par rapport à la partie fixe, comme cela est représenté sur la figure 25.

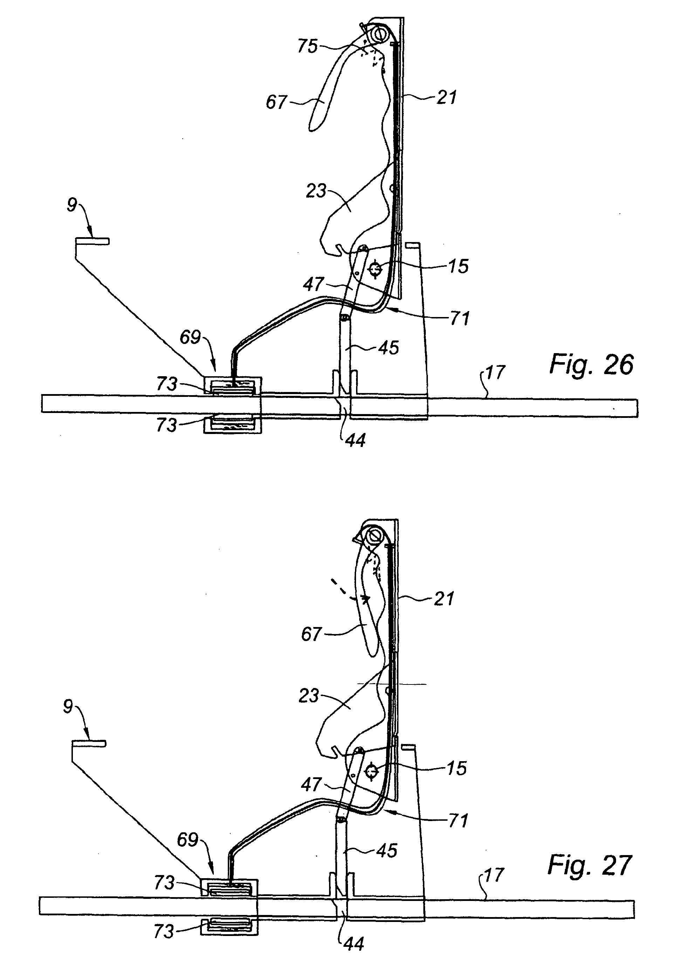

Dans la variante représentée aux figures 26 et 27, établie sur la base du mode de réalisation des figures 17 et 18, on a incorporé à la poignée de préhension 21 une poignée de freinage 67 reliée à un dispositif de freinage 69 par l'intermédiaire d'un câble de freinage 71.

Le dispositif de freinage 69 peut typiquement comprendre deux patins 73 aptes à venir pincer la partie fixe 17 sous l'action du câble 71.

Un ressort de rappel 75 tend à placer la poignée de freinage 67 dans une position où les patins de freinage sont activés (voir figure 26), empêchant ainsi les déplacements intempestifs de la partie ouvrante 9 par rapport à la partie fixe 17.

Pour désactiver ces patins de freinage, on rabat la poignée de freinage 67 vers la poignée de préhension 21, comme cela est visible sur la figure 27, permettant ainsi de déplacer à volonté la partie ouvrante 9 par rapport à la partie 17.

La présence de ces moyens de freinage actifs par défaut permet, une fois que la partie ouvrante 9 a été déplacée par rapport à la partie fixe 17 en vue de réaliser les opérations de maintenance du turboréacteur, d'éviter que cette partie ouvrante 29 ne se referme de manière intempestive, au risque de blesser un opérateur.

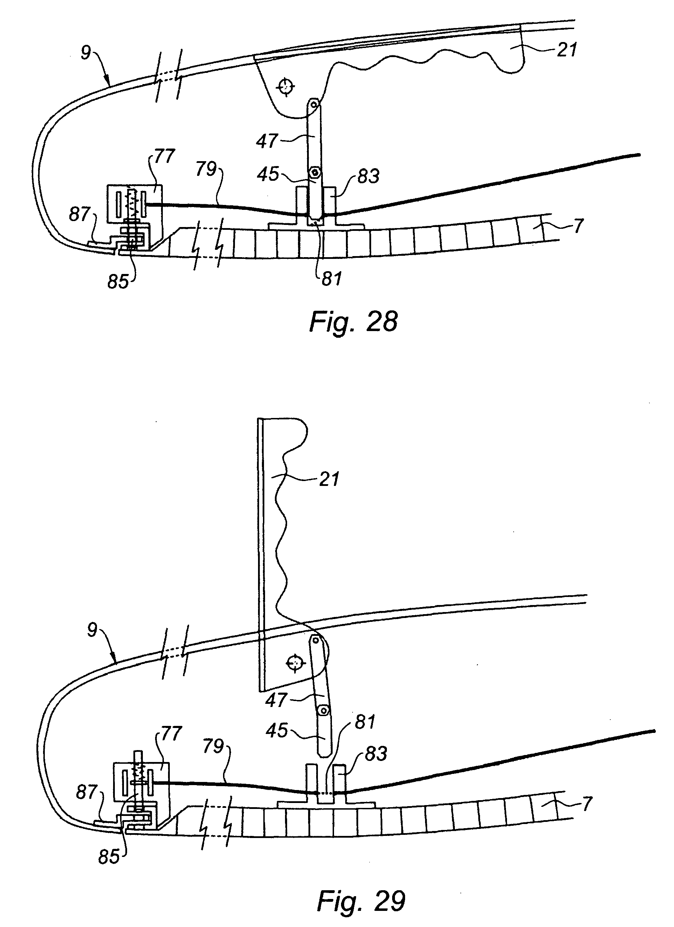

Le mode de réalisation représenté sur les figures 28 et 29 diffère de celui représenté sur les figures 17 et 18, en ceci que le doigt 45 ne réalise pas directement le verrouillage de la partie ouvrante 9 par rapport à la partie fixe 17 : ce verrouillage est réalisé par un verrou électromagnétique 77 relié par un câble électrique 79 à un interrupteur 81 placé au fond d'une embase 83 susceptible de recevoir le doigt 45.

Le verrou électromagnétique 77comporte un pêne 85 apte à coopérer avec une gâche 87 solidaire de la partie ouvrante 9.

Lorsque la poignée de préhension 21 passe de la position fermée visible sur la figure 28 à la position ouverte visible sur la figure 29, le doigt 45 se désengage de l'embase 43, entraînant ainsi la fermeture de l'interrupteur 81, et la translation du pêne 85 d'une position dans laquelle il coopère avec la gâche 87 (figure28) à une position dans laquelle ce pêne est désengagé de cette gâche (voir figure 29), permettant ainsi le déplacement au moyen de la poignée de préhension 21 de la partie ouvrante 9 par rapport à la partie fixe 17. Le blocage de la poignée de préhension de ce mode de réalisation est identique à celui du mode de réalisation des Figures 17 et 18.

Comme on l'aura compris à la lumière de la description qui précède, la poignée de préhension 21 permet d'une part l'ouverture du dispositif de verrouillage, et d'autre part les déplacements manuels de la partie ouvrante par rapport à la partie fixe.

Ces déplacements sont permis du fait qu'en position d'ouverture, les mouvements de cette poignée de préhension selon la direction de déplacement de la partie ouvrante par rapport à la partie fixe, sont bloqués.

Bien entendu, il faut comprendre que cette poignée de préhension 21 est dimensionnée de manière appropriée, c'est-à-dire de manière à pouvoir supporter les efforts d'actionnement exercés par l'opérateur en vue de réaliser les déplacement d'ouverture et de fermeture de la partie ouvrante par rapport à la partie fixe.

La présente invention définie par les revendications annexées n'est nullement limitée aux modes de réalisation décrits et représentés, fournis à titre de simples exemples.

## Revendications

1. Dispositif de verrouillage d'une partie ouvrante (9) de nacelle (1) de turboréacteur (5) par rapport à une partie fixe (7, 17), comprenant : des moyens de verrouillage (13, 16 ; 44, 45) de ladite partie ouvrante (9) par rapport à ladite partie fixe (7, 17), des moyens d'actionnement (21) de ces moyens de verrouillage, montés mobiles sur ladite partie ouvrante (9) entre une position de fermeture dans laquelle ils permettent le blocage desdits moyens de verrouillage (13, 16 ; 44, 45) et une position d'ouverture dans laquelle ils permettent la libération de ces moyens de verrouillage (13, 16 ; 44, 45), ce dispositif étant **caractérisé en ce que** lesdits moyens d'actionnement comprennent des moyens de préhension (21), et **en ce qu'**il comprend des moyens (41, 43 ; 51 ; 57) pour bloquer en position d'ouverture lesdits moyens de préhension (21) par rapport à ladite partie ouvrante (9) au moins selon la direction de déplacement de ladite partie ouvrante (9).

2. Dispositif selon la revendication 1, **caractérisé en ce que** lesdits moyens de préhension (21) sont mobiles en rotation entre lesdites positions de fermeture et d'ouverture.

3. Dispositif selon la revendication 1, **caractérisé en ce que** lesdits moyens de préhension (21) sont mobiles en translation entre lesdites positions de fermeture et d'ouverture.

4. Dispositif selon la revendication 2, **caractérisé en ce que** lesdits moyens de verrouillage comprennent au moins un crochet (13) monté mobile sur ladite partie ouvrante (9) et apte à coopérer avec un contre-crochet (16) formé dans ladite partie fixe (7, 17).

5. Dispositif selon l'une des revendications 2 ou 3, **caractérisé en ce que** lesdits moyens de verrouillage comprennent au moins un doigt (45) monté mobile sur ladite partie ouvrante (9) et apte à coopérer avec un orifice (44) formé dans ladite partie fixe (7, 17).

6. Dispositif selon la revendication 2, **caractérisé en ce que** lesdits moyens de blocage comprennent au moins un doigt (41) monté mobile sur ladite partie ouvrante (9) et apte à coopérer avec un cran de blocage (43) solidaire de cette partie ouvrante (9).

7. Dispositif selon la revendication 2, **caractérisé en ce que** lesdits moyens de blocage comprennent une came de blocage (51).

8. Dispositif selon la revendication 3, **caractérisé en ce que** lesdits moyens de blocage comprennent un fourreau (57) dans lequel sont montés lesdits moyens de préhension (21).

9. Dispositif selon l'une quelconque des revendications précédentes, **caractérisé en ce qu'**il comprend une gâchette (23) de dégagement desdits moyens de préhension (21).

10. Dispositif selon l'une quelconque des revendications précédentes, **caractérisé en ce qu'**il comprend des moyens de freinage (69) de ladite partie ouvrante (9) par rapport à ladite partie fixe (7, 17), et des moyens d'actionnement (67, 71) de ces moyens de freinage, montés sur lesdits moyens de préhension (21).

11. Dispositif selon l'une quelconque des revendications précédentes, **caractérisé en ce que** lesdits moyens de verrouillage (77) sont commandés électriquement par lesdits moyens d'actionnement (21).

12. Dispositif selon la revendication 11, **caractérisé en ce que** lesdits moyens de verrouillage (77) sont géographiquement distincts desdits moyens d'actionnement (21).

13. Nacelle (1) de turboréacteur (5), comprenant une partie fixe et une partie ouvrante, **caractérisée en ce qu'**elle comprend un dispositif de verrouillage de ces deux parties l'une par rapport à l'autre conforme à l'une quelconque des revendications précédentes.

14. Nacelle selon la revendication 13, **caractérisée en ce que** ladite partie ouvrante (9) est montée coulissante par rapport à ladite partie fixe (7, 17).

## Claims

1. A device for locking an opening part (9) of a turbojet engine (5) nacelle (1) in relation to a stationary part (7, 17), comprising means (13, 16; 44, 45) for locking said opening part (9) in relation to said stationary part (7, 17) and means (21) for actuating said locking means, movably mounted on said opening part (9) between a closed position in which they make it possible to lock said locking means (13, 16; 44, 45) and an open position in which they make it possible to release said locking means (13, 16; 44, 45), the device being **characterized in that** said actuating means comprise gripping means (21), and **in that** it comprises means (41, 43; 51; 57) for locking said gripping means (21) in the open position in relation to said opening part (9) at least in the direction of travel of said opening part (9).

2. The device according to claim 1, **characterized in that** said gripping means (21) can be rotated between said closed and open positions.

3. The device according to claim 1, **characterized in that** said gripping means (21) can be translated between said closed and open positions.

4. The device according to claim 2, **characterized in that** said locking means comprise at least one hook (13) movably mounted on said opening part (9) and able to cooperate with a counter-hook (16) formed in said stationary part (7, 17).

5. The device according to one of claims 2 or 3, **characterized in that** said locking means comprise at least one finger (45) movably mounted on said opening part (9) and able to cooperate with an opening (44) formed in said stationary part (7, 17).

6. The device according to claim 2, **characterized in that** said blocking means comprise at least one finger (41) movably mounted on said opening part (9) and able to cooperate with a blocking notch (43) secured to the opening part (9).

7. The device according to claim 2, **characterized in that** said blocking means comprise a blocking cam (51).

8. The device according to claim 3, **characterized in that** said blocking means comprise a sheath (57) in which said gripping means (21) are mounted.

9. The device according to any one of the preceding claims, **characterized in that** it comprises a strike (23) for releasing said gripping means (21).

10. The device according to any one of the preceding claims, **characterized in that** it comprises braking means (69) for braking said opening part (9) in relation to said stationary part (7, 17), and means (67, 71) for actuating said braking means, mounted on said gripping means (21).

11. The device according to any one of the preceding claims, **characterized in that** said locking means (77) are electrically controlled by said actuating means (21).

12. The device according to claim 11, **characterized in that** said locking means (77) are geographically separate from said actuating means (21).

13. A turbojet engine (5) nacelle (1), comprising a stationary part and an opening part, **characterized in that** it comprises a device for locking said two parts in relation to one another according to any one of the preceding claims.

14. The nacelle according to claim 13, **characterized in that** said opening part (9) is slidingly mounted in relation to said stationary part (7, 17).

## Patentansprüche

1. Verriegelungsvorrichtung eines öffnenden Abschnitts (9) einer Gondel (1) eines Turbotriebwerks (5) im Verhältnis zu einem starren Abschnitt (7, 17), die Verriegelungsmittel (13, 16; 44, 45) des öffnenden Abschnitts (9) im Verhältnis zum starren Abschnitt (7, 17), Betätigungsmittel (21) dieser Verriegelungsmittel, die bewegbar auf dem öffnenden Abschnitt (9) zwischen einer geschlossenen Stellung, in der sie die Blockade der Verriegelungsmittel (13, 16; 44, 45) ermöglichen, und einer geöffneten Stellung, in der sie die Freigabe dieser Verriegelungsmittel (13, 16; 44, 45) ermöglichen, bewegbar montiert sind, umfassen, wobei diese Vorrichtung **dadurch gekennzeichnet ist, dass** die Betätigungsmittel Greifmittel (21) aufweisen und dass sie Mittel (41 , 43; 51; 57) umfasst, um die Greifmittel (21) im Verhältnis zum öffnenden Abschnitt (9) mindestens gemäß der Verlagerungsrichtung des öffnenden Abschnitts (9) in geöffneter Stellung zu blockieren.

2. Vorrichtung nach Anspruch 1, **dadurch gekennzeichnet, dass** die Greifmittel (21) zwischen der geschlossenen und der geöffneten Stellung drehend bewegbar montiert sind.

3. Vorrichtung nach Anspruch 1, **dadurch gekennzeichnet, dass** die Greifmittel (21) zwischen der geschlossenen und der geöffneten Stellung verschiebend bewegbar sind.

4. Vorrichtung nach Anspruch 2, **dadurch gekennzeichnet, dass** die Verriegelungsmittel mindestens einen Haken (13) umfassen, der auf dem öffnenden Abschnitt (9) bewegbar montiert ist und imstande, mit einem Gegenhaken (16) zusammenzuarbeiten, der in dem starren Abschnitt (7, 17) ausgebildet ist.

5. Vorrichtung nach einem der Ansprüche 2 oder 3, **dadurch gekennzeichnet, dass** die Verriegelungsmittel mindestens einen Finger (45) umfassen, der auf dem öffnenden Abschnitt (9) bewegbar montiert ist und imstande, mit einer Öffnung (44) zusammenzuarbeiten, die in dem starren Abschnitt (7, 17) ausgebildet ist.

6. Vorrichtung nach Anspruch 2, **dadurch gekennzeichnet, dass** die Blockiermittel mindestens einen Finger (41) umfassen, der auf dem öffnenden Abschnitt (9) bewegbar montiert ist und imstande, mit einer Blockierkerbe (43) zusammenzuarbeiten, die mit diesem öffnenden Abschnitt (9) verbunden ist.

7. Vorrichtung nach Anspruch 2, **dadurch gekennzeichnet, dass** die Blockiermittel einen Blockiernocken (51) umfassen.

8. Vorrichtung nach Anspruch 3, **dadurch gekennzeichnet, dass** die Blockiermittel eine Hülle (57) umfassen, in der die Greifmittel (21) montiert sind.

9. Vorrichtung nach einem der vorangehenden Ansprüche, **dadurch gekennzeichnet, dass** sie eine Freigabezuhaltung (23) der Greifmittel (21) umfasst.

10. Vorrichtung nach einem der vorangehenden Ansprüche, **dadurch gekennzeichnet, dass** sie Bremsmittel (69) des öffnenden Abschnitts (9) im Verhältnis zum starren Abschnitt (7, 17) umfasst und Betätigungsmittel (67, 71) dieser Bremsmittel, die auf den Greifmitteln (21) montiert sind.

11. Vorrichtung nach einem der vorangehenden Ansprüche, **dadurch gekennzeichnet, dass** die Verriegelungsmittel (77) von den Betätigungsmitteln (21) elektrisch gesteuert werden.

12. Vorrichtung nach Anspruch 11, **dadurch gekennzeichnet, dass** die Verriegelungsmittel (77) von den Betätigungsmitteln (21) geografisch unterschiedlich sind.

13. Gondel (1) eines Turbotriebwerks (5), die einen starren Abschnitt und einen öffnenden Abschnitt umfasst, **dadurch gekennzeichnet, dass** sie eine Verriegelungsvorrichtung dieser zwei Abschnitte im Verhältnis zueinander nach einem der vorangehenden Ansprüche umfasst.

14. Gondel nach Anspruch 13, **dadurch gekennzeichnet, dass** der öffnende Abschnitt (9) im Verhältnis zum starren Abschnitt (7; 17) gleitend montiert ist.
